# EUROPEAN PATENT SPECIFICATION

(11) **EP 4 298 067 B1**
(45) Date of publication and mention of the grant of the patent: **28.10.2026**
(21) Application number: 22708697.2
(22) Date of filing: 22.02.2022
(51) Int. Cl.: C03B 33/02, B23K 26/53, C03B 33/07

(54) **METHODS FOR LASER PROCESSING TRANSPARENT MATERIAL USING PULSED LASER BEAM FOCAL LINES**
VERFAHREN ZUR LASERBEARBEITUNG VON TRANSPARENTEM MATERIAL UNTER VERWENDUNG GEPULSTER LASERSTRAHLBRENNLINIEN
PROCÉDÉS DE TRAITEMENT LASER DE MATÉRIAU TRANSPARENT À L'AIDE DE LIGNES FOCALES DE FAISCEAU LASER PULSÉ

(30) Priority: 26.02.2021 US 202163154173 P
(43) Date of publication of application: 03.01.2024
(73) Proprietor: Corning Incorporated, Corning, New York 14831 (US)
(72) Inventor: BECKER, Alejandro Antonio, 82131 Stockdorf (DE); ROEDER, Tobias Christian, 81825 Munich (DE)
(74) Representative: Dilg, Haeusler, Schindelmann Patentanwaltsgesellschaft mbH
(86) International application number: PCT/US2022/017200
(87) International publication number: WO 2022/182619

(56) References cited:
- WO-A2-2012/006736
- US-A1- 2011 049 765
- US-A1- 2014 008 338
- US-A1- 2018 062 342
- US-A1- 2019 322 564

## Description

### CROSS-REFERENCE TO RELATED APPLICATIONS

### BACKGROUND

### Field

The present specification generally relates to apparatuses and methods for laser processing transparent workpieces, and more particularly, to cross-cutting perforations in transparent workpieces.

### Technical Background

The area of laser processing of materials encompasses a wide variety of applications that involve cutting, drilling, milling, welding, melting, etc. of different types of materials. Among these processes, one that is of particular interest is cutting or separating transparent substrates in a process that may be utilized in the production of materials such as glass, sapphire, or fused silica for thin film transistors (TFT) or display materials for electronic devices.

From process development and cost perspectives there are many opportunities for improvement in cutting and separating glass substrates. It is of great interest to have a faster, cleaner, cheaper, more repeatable, and more reliable method of separating glass substrates than what is currently practiced in the market. Accordingly, a need exists for alternative improved methods for separating glass substrates.
US 2019/322564 A1 is directed to methods for separating substrates. US 2014/008338 A1 relates to laser dicing methods. WO 2012/006736 A2 is directed to methods of material processing by laser filamentation. US 2011/049765 A1 relates to methods for laser cutting glass substrates.

### SUMMARY

The invention relates to a method for processing a transparent workpiece, the method comprising: forming a first contour line in the transparent workpiece, the first contour line comprising a first plurality of defects in the transparent workpiece such that the first contour line defines a first contour, wherein forming the first contour line comprises: directing a first pulsed laser beam oriented along a beam pathway and output by a beam source through an aspheric optical element and into the transparent workpiece such that a portion of the first pulsed laser beam directed into the transparent workpiece generates an induced absorption within the transparent workpiece, the induced absorption creating a defect within the transparent workpiece; and translating the transparent workpiece and the first pulsed laser beam relative to each other along the first contour line, thereby laser forming the first plurality of defects along the first contour line within the transparent workpiece; forming a second contour line in the transparent workpiece, the second contour line comprising a second plurality of defects in the transparent workpiece such that the second contour line defines a second contour intersecting the first contour line at an intersection point, wherein forming the second contour line comprises: directing a second pulsed laser beam oriented along a beam pathway and output by a beam source through an aspheric optical element and into the transparent workpiece such that a portion of the second pulsed laser beam directed into the transparent workpiece generates an induced absorption within the transparent workpiece, the induced absorption producing a modification of the transparent workpiece along the second contour line to create a defect within the transparent workpiece; and translating the transparent workpiece and the second pulsed laser beam relative to each other along the second contour line, thereby laser forming the second plurality of defects along the contour line within the transparent workpiece, wherein the laser pulse energy of the second pulsed laser beam is increased from a first laser pulse energy to a second laser pulse energy at a first distance from the intersection point where an optical area of the second pulsed laser beam interacts with an optical area of the first contour line; and wherein the laser pulse energy of the second pulsed laser beam is decreasing from the second laser pulse energy to the first laser pulse energy at a second distance from the intersection point where the optical area of the second pulsed laser beam does not interact with the optical area of the first contour line.

The invention further relates to a method for processing a transparent workpiece, the method comprising: forming a first contour line in the transparent workpiece, the first contour line comprising a first plurality of defects in the transparent workpiece such that the first contour line defines a first contour, wherein forming the first contour line comprises: directing a first pulsed laser beam oriented along a beam pathway and output by a beam source through an aspheric optical element and into the transparent workpiece such that a portion of the first pulsed laser beam directed into the transparent workpiece generates an induced absorption within the transparent workpiece, the induced absorption producing a modification of the transparent workpiece along the first contour line to create a defect within the transparent workpiece; and translating the transparent workpiece and the first pulsed laser beam relative to each other along the first contour line, thereby laser forming the first plurality of defects along the first contour line within the transparent workpiece; wherein the laser pulse energy of the first pulsed laser beam is increased from the first laser pulse energy to the second laser pulse energy at a first distance to an edge of the transparent material where an optical area of the first pulsed laser beam interacts with an optical area of the edge of the transparent material.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1A schematically depicts the formation of a first contour line of defects in a transparent workpiece;
FIG. 1B schematically depicts an example pulsed laser beam focal line during processing of a transparent workpiece;
FIG. 2A schematically depicts the formation of a second contour line of defects in a transparent workpiece;
FIG. 2B depicts a cross section of a transparent workpiece having a first contour line of defects and a second contour line of defects formed therein;
FIG. 3 schematically depicts an optical assembly for pulsed laser processing;

### DETAILED DESCRIPTION

Reference will now be made in detail to embodiments of processes for laser processing transparent workpieces, such as glass workpieces, examples of which are illustrated in the accompanying drawings. Whenever possible, the same reference numerals will be used throughout the drawings to refer to the same or like parts. A transparent workpiece is laser processed to form a contour line in the transparent workpiece comprising a series of defects that define a desired perimeter of one or more apertures through the transparent workpiece. A pulsed laser outputs a pulsed laser beam through an aspheric optical element such that the pulsed laser beam projects a pulsed laser beam focal line that is directed into the transparent workpiece. The pulsed laser beam focal line is utilized to create a series of defects in the transparent workpiece thereby defining the contour line. These defects may be referred to, in various embodiments herein, as line defects, perforations, or nano-perforations in the workpiece. Various embodiments of methods and apparatuses for processing a transparent workpiece will be described herein with specific reference to the appended drawings.

The phrase "transparent workpiece," as used herein, means a workpiece formed from glass or glass-ceramic which is transparent, where the term "transparent," as used herein, means that the material has an optical absorption of less than about 20% per mm of material depth, such as less than about 10% per mm of material depth for the specified pulsed laser wavelength, or such as less than about 1% per mm of material depth for the specified pulsed laser wavelength. According to one or more embodiments, the transparent workpiece may have a thickness of from about 50 microns (µm) to about 10 mm, such as from about 100 µm to about 5 mm, from about 0.5 mm to about 3 mm, or from about 100 µm to about 2 mm, for example, 100 µm, 250 µm, 300 µm, 500 µm, 700 µm, 1 mm, 1.2 mm, 1.5 mm, 2 mm, 5 mm, or 7 mm.

The present disclosure provides methods for processing transparent workpieces. As used herein, "laser processing" may include forming contour lines in transparent workpieces, separating transparent workpieces, or combinations thereof. Transparent workpieces may comprise glass workpieces formed from glass compositions, such as borosilicate glass, soda-lime glass, aluminosilicate glass, alkali aluminosilicate glass, alkaline earth aluminosilicate glass, alkaline earth boro-aluminosilicate glass, fused silica, or crystalline materials such as sapphire, silicon, gallium arsenide, or combinations thereof. In embodiments, the glass may be ion-exchangeable, such that the glass composition can undergo ion-exchange for mechanical strengthening before or after laser processing the transparent workpiece and before or after chemical etching of the transparent workpiece. For example, the transparent workpiece may comprise ion exchanged or ion exchangeable glass, such as Corning Gorilla^{®} Glass available from Corning Incorporated of Corning, NY (e.g., code 2318, code 2319, and code 2320). Further, these ion exchanged glasses may have coefficients of thermal expansion (CTE) of from about 6 ppm/°C to about 10 ppm/°C. In embodiments, the glass composition of the transparent workpiece may include greater than about 1.0 mol.% boron and/or compounds containing boron, including, without limitation, B₂O₃. In another embodiment, the glass compositions from which the transparent workpieces are formed include less than or equal to about 1.0 mol.% of oxides of boron and/or compounds containing boron. In embodiments, the glass compositions from which the transparent workpieces are formed include greater than or equal to about 92.5 wt% of silica. Moreover, the transparent workpiece may comprise other components which are transparent to the wavelength of the laser, for example, crystals such as sapphire or zinc selenide.

Some transparent workpieces may be utilized as display and/or TFT (thin film transistor) substrates. Some examples of such glasses or glass compositions suitable for display or TFT use are EAGLE XG^{®}, CONTEGO, and CORNING LOTUS^{™} available from Corning Incorporated of Corning, NY. The alkaline earth boro-aluminosilicate glass compositions may be formulated to be suitable for use as substrates for electronic applications including, without limitation, substrates for TFTs. The glass compositions used in conjunction with TFTs typically have CTEs similar to that of silicon (such as less than 5 x 10⁻⁶/K, or even less than 4 x 10⁻⁶/K, for example, approximately 3 x 10⁻⁶/K, or about 2.5 x 10⁻⁶/K to about 3.5 x 10⁻⁶/K and have low levels of alkali within the glass. Low levels of alkali (e.g., trace amounts of about 0 wt.% to 2 wt.%, such as less than 1 wt.%, for example, less than 0.5 wt.%) may be used in TFT applications because alkali dopants, under some conditions, leach out of glass and contaminate or "poison" the TFTs, possibly rendering the TFTs inoperable. According to some embodiments, the laser cutting processes described herein may be used to form apertures within transparent workpieces in a controlled fashion with negligible debris, minimum defects, and low subsurface damage to the edges, preserving workpiece integrity and strength.

The phrase "contour line," as used herein, denotes a line (e.g., a line, a curve, etc.) formed along a contour that extends along the surface of a transparent workpiece. The contour line generally consists of one or more defects introduced into the transparent workpiece using various techniques. As used herein, a "defect" may include an area of modified material (relative to the bulk material), void space, scratch, flaw, hole, or other deformities in the transparent workpiece which enables separation of material of the transparent workpiece along the contour line by application of a chemical etching solution to the transparent workpiece. While not intending to be limited by theory, the chemical etching solution may remove material of the transparent workpiece at and immediately surrounding each defect, thereby enlarging each defect such that voids formed from adjacent defects overlap, ultimately leading to separation of the transparent workpiece along the contour line.

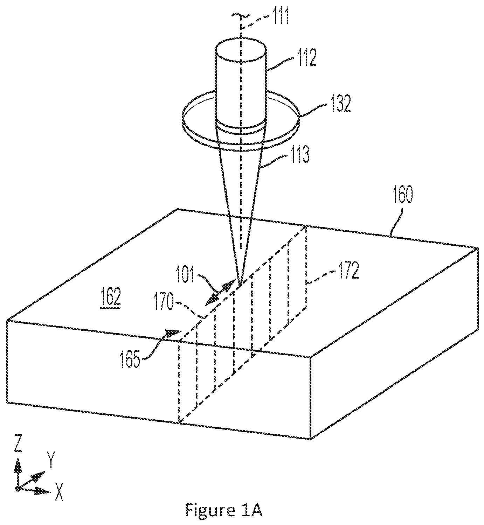

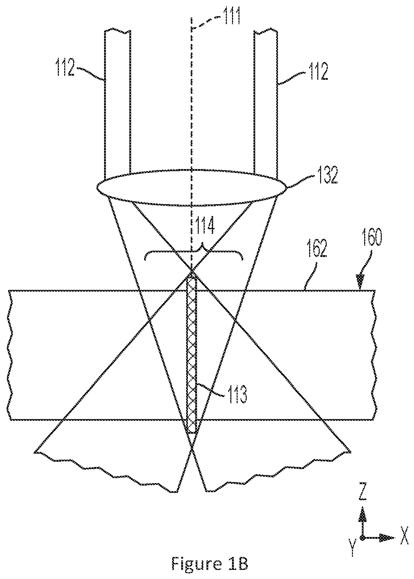

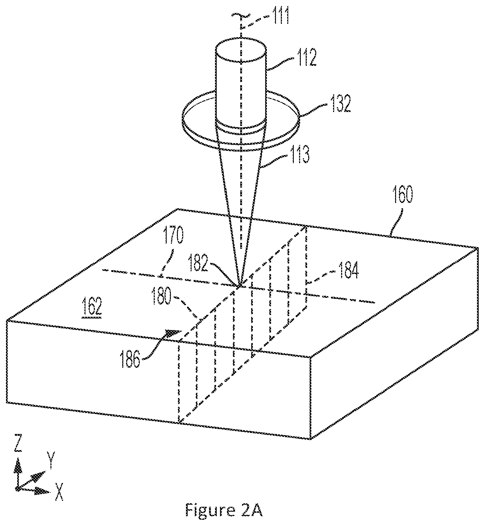

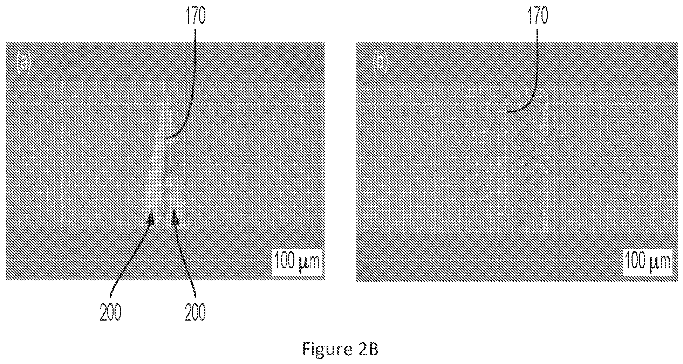

Referring now to FIGS. 1A, 1B, and 2A, 2B by way of example, a transparent workpiece 160, such as a glass workpiece or a glass-ceramic workpiece, is schematically depicted undergoing processing according to the methods described herein. FIGS. 1A and 1B depict the formation of a first contour line 170 in the transparent workpiece 160, which is formed by translating a pulsed laser beam 112 and the transparent workpiece 160 relative to one another such that the pulsed laser beam 112 translates relative to the transparent workpiece 160 in a translation direction 101. FIG. 2A depicts the formation of a second contour line 180 in the transparent workpiece 160, which may be formed by translating the pulsed laser beam 112 and the transparent workpiece 160 relative to one another such that the pulsed laser beam 112 translates relative to the transparent workpiece 160 in a translation direction where the second contour line 180 intersects the first contour line 170 at an intersection point 182. In embodiments, the pulsed laser beam 112 translates relative to the transparent workpiece 160 in a translation direction where the second contour line 180 orthogonally intersects the first contour line 170 at an intersection point 182.

During formation of the second contour line 180, the laser pulse energy of the pulsed laser beam 112 is increased from a first laser pulse energy to a second laser pulse energy at a first distance from the intersection point in order to account for absorbtion of at least some of the laser power from the pulsed laser beam 112 which occurs proximate the position of the first contour line 170. As a result of the absorption increase of at least some of the laser power from the pulsed laser beam with decreasing distance to the first contour line 170, the second contour line 180 is altered in the region proximate the first contour line 170 and therefore would not form a complete defect within the transparent material but because of an increase of laser pulse energy the second contour line 180 may form a complete defect within the transparent material. The first distance is the distance at which the optical area (i.e the area of induced absorption within the transparent workpiece) of the pulsed laser beam interacts with an optical area of the first contour line 170 resulting in absorbtion of at least some of the laser power from the pulsed laser beam 112. This distance is dependent on the laser parameters, composition of the transparent material, and the thickness of the transparent material. For example, without limiting the embodiments described herein, for a transparent material having a thickness of 0.7 mm the laser pulse energy is increased about 100 µm to about 500 µm before reaching the intersection point of the first contour line 170. In embodiments, for a transparent material having a thickness of 0.7 mm, the laser pulse energy is increased about 100 µm to about 400 µm, or in embodiments about 100 µm to about 300 µm, or in embodiments about 100 µm to about 200 µm, about 100 µm to about 150 µm before reaching the intersection point of the first contour line 170.

FIG. 2B depicts two cross sections of a transparent material. The cross-section on the left labelled "(a)" depicts a transparent material having perforations formed without increasing the laser pulse energy at a first distance from the intersection point. The cross-section (a) of FIG. 2B depicts a "shadow area" 200 proximate the first contour line 170 where absorbtion of at least some of the laser power from the pulsed laser beam 112 proximate the position of the first contour line 170 prevents formation of complete defects within the transparent material. A "complete defect" is a defect that begins at a first point on a surface of or within the transparent material and extends past the shadow area by increasing the laser pulse energy of the pulsed laser beam 112 from a first laser pulse energy to a second laser pulse energy. In embodiments, a complete defect is a defect that that extends completely through the entire thickness of the transparent material. In embodiments, the complete defect extends past the shadow area but does not extend through the entire thickness of the transparent material. The cross-section on the right of FIG. 2B, labelled "(b)", depicts a transparent material having perforations formed with increasing the laser pulse energy proximate the first contour line 170. As shown in the cross-section (b) of FIG. 2B, increasing the laser pulse energy resulted in the formation of complete defects within the transparent material. Further details of the formation of the first contour line 170 and the second contour line 180 are described below.

In embodiments, a "shadow area" may also occur proximate the edges of the transparent workpiece where absorbtion of at least some of the laser power from the pulsed laser beam 112 proximate the edges prevents formation of complete defects within the transparent material. Accordingly, the laser pulse energy of the pulsed laser beam is increased from a first laser pulse energy to a second laser pulse energy at a first distance to an edge of the transparent material where an optical area of the pulsed laser beam interacts with an optical area of the edge of the transparent material. In embodiments, for a transparent material having a thickness of 0.7 mm, the laser pulse energy is increased about 100 µm to about 400 µm, or in embodiments about 100 µm to about 300 µm, or in embodiments about 100 µm to about 200 µm, about 100 µm to about 150 µm before reaching the edge of the transparent workpiece. In embodiments, the laser pulse energy is decreased from the second laser pulse energy to the first laser pulse energy at a second distance away from the edge where the optical area of the pulsed laser beam does not interact with the optical area of the edge of the transparent workpiece.

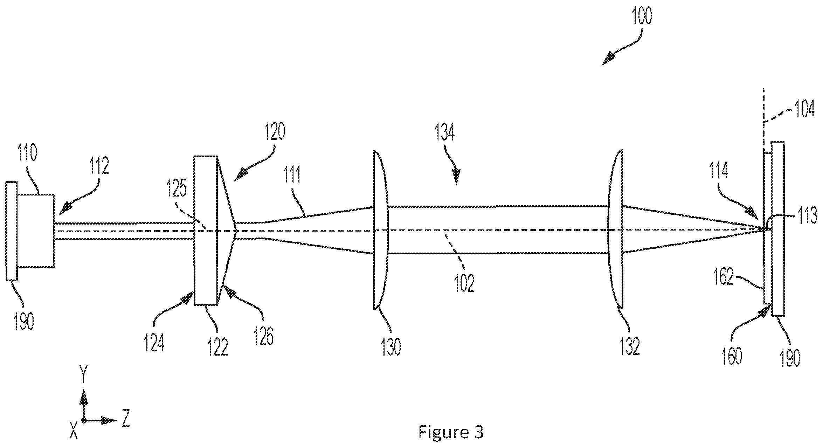

FIGS. 1A, 1B and 2A depict the pulsed laser beam 112 along a beam pathway 111 and oriented such that the pulsed laser beam 112 may be focused into a pulsed laser beam focal line 113 within the transparent workpiece 160 using an aspheric optical element 120 (FIG. 3), for example, an axicon and one or more lenses (e.g., a first lens 130 and a second lens 132, as described below and depicted in FIG. 3). Further, the pulsed laser beam focal line 113 is a portion of a quasi non-diffracting beam, as defined in more detail below.

FIGS. 1A,1B, and 2A depict that the pulsed laser beam 112 forms a laser beam focal line 113 oriented to the beam propagation direction and comprised of multiple beam spots. A beam spot 114 of the laser beam focal line 113 is projected onto an imaging surface 162 of the transparent workpiece 160. As used herein the "imaging surface" 162 of the transparent workpiece 160 is the surface of the transparent workpiece 160 at which the pulsed laser beam 112 initially contacts the transparent workpiece 160. As also used herein "beam spot" refers to a cross section of a laser beam (e.g., the pulsed laser beam 112) at a focal point at or within a workpiece (e.g., the transparent workpiece 160). In embodiments, the pulsed laser beam focal line 113 may comprise an axisymmetric cross section in a direction normal the beam pathway 111 (e.g., an axisymmetric beam spot) and in other embodiments, the pulsed laser beam focal line 113 may comprise a non-axisymmetric cross section in a direction normal the beam pathway 111 (e.g., a non-axisymmetric beam spot). As used herein, axisymmetric refers to a shape that is symmetric, or appears the same, for any arbitrary rotation angle made about a central axis, and "non-axisymmetric" refers to a shape that is not symmetric for any arbitrary rotation angle made about a central axis. A circular beam spot is an example of an axisymmetric beam spot and an elliptical beam spot is an example of a non-axisymmetric beam spot. The rotation axis (e.g., the central axis) is most often taken as being the propagation axis of the laser beam (e.g., the beam pathway 111). Example pulsed laser beams comprising a non-axisymmetric beam cross section are described in more detail in U.S. Provisional Pat. App. No. 62/402,337, titled "Apparatus and Methods for Laser Processing Transparent Workpieces Using Non-Axisymmetric Beam Spots".

The contour lines 170, 180 extend along a contour 165, 186 which delineates a line of intended separation in the transparent workpiece 160. The first contour line 170 comprises a plurality of defects 172 that extend into the surface of the transparent workpiece 160 and establish a path for separation of material of the transparent workpiece 160 from the remaining transparent workpiece 160, for example, by applying a chemical etching solution to the transparent workpiece 160. Similarly, the second contour line 180 comprises a plurality of defects 184 that extend into the surface of the transparent workpiece 160 and establish a path for separation of material of the transparent workpiece 160 from the remaining transparent workpiece 160

Referring to FIGS. 1A, 1B, and 2A, in the embodiments described herein, a pulsed laser beam 112 (with a beam spot 114) projected onto the transparent workpiece 160 is directed onto the transparent workpiece 160 (e.g., condensed into a high aspect ratio line focus that penetrates through at least a portion of the thickness of the transparent workpiece 160). This forms the pulsed laser beam focal line 113. In one embodiment the laser beam focal line 113 is orientated such that the first beam spot 114 of the pulsed laser beam focal line 113 is within the transparent workpiece 160 (i.e. below the top surface of the transparent workpiece 160 and between the top surface and the bottom surface of the transparent workpiece 160). The pulsed laser beam focal line 113 penetrates at least a portion of the transparent workpiece 160.

Further, the pulsed laser beam 112 may be translated relative to the transparent workpiece 160 (e.g., in the translation direction 101) to form the plurality of defects 172, 184 of each contour line 170, 180. Directing or localizing the pulsed laser beam 112 into the transparent workpiece 160 generates an induced absorption within the transparent workpiece 160 and deposits enough energy to break chemical bonds in the transparent workpiece 160 at spaced locations to form the defects 172, 184. According to one or more embodiments, the pulsed laser beam 112 may be translated across the transparent workpiece 160 by motion of the transparent workpiece 160 (e.g., motion of a translation stage coupled to the transparent workpiece 160), motion of the pulsed laser beam 112 (e.g., motion of the pulsed laser beam focal line 113), or motion of both the transparent workpiece 160 and the pulsed laser beam focal line 113. By translating the pulsed laser beam focal line 113 relative to the transparent workpiece 160, the plurality of defects 172, 184 may be formed in the transparent workpiece 160.

Referring again to FIGS. 1A, 1B, and 2A, the pulsed laser beam 112 used to form the defects 172 further has an intensity distribution I(X,Y,Z), where Z is the beam propagation direction of the pulsed laser beam 112, and X and Y are directions orthogonal to the direction of propagation, as depicted in the figures. The X-direction and Y-direction may also be referred to as cross-sectional directions and the X-Y plane may be referred to as a cross-sectional plane. The intensity distribution of the pulsed laser beam 112 in a cross-sectional plane may be referred to as a cross-sectional intensity distribution.

The pulsed laser beam 112 may comprise a quasi-non-diffracting beam, for example, a beam having low beam divergence as mathematically defined below, by propagating the pulsed laser beam 112 (e.g., outputting the pulsed laser beam 112, such as a Gaussian beam, using a beam source 110) through an aspheric optical element 120, as described in more detail below with respect to the optical assembly 100 depicted in FIG. 3. Beam divergence refers to the rate of enlargement of the beam cross section in the direction of beam propagation (i.e., the Z direction). As used herein, the phrase "beam cross section" refers to the cross section of the pulsed laser beam 112 along a plane perpendicular to the beam propagation direction of the pulsed laser beam 112, for example, along the X-Y plane. Example quasi non-diffracting beams include Gauss-Bessel beams and Bessel beams.

Diffraction is one factor that leads to divergence of pulsed laser beams 112. Other factors include focusing or defocusing caused by the optical systems forming the pulsed laser beams 112 or refraction and scattering at interfaces. Pulsed laser beams 112 for forming the defects 172 of the contour line 170 may have beam spots 114 with low divergence and weak diffraction. The divergence of the pulsed laser beam 112 is characterized by the Rayleigh range Z_{R}, which is related to the variance σ² of the intensity distribution and beam propagation factor M² of the pulsed laser beam 112. In the discussion that follows, formulas will be presented using a Cartesian coordinate system. Corresponding expressions for other coordinate systems are obtainable using mathematical techniques known to those of skill in the art. Additional information on beam divergence can be found in the articles entitled "New Developments in Laser Resonators" by A.E. Siegman in SPIE Symposium Series Vol. 1224, p. 2 (1990) and "M2 factor of Bessel-Gauss beams" by R. Borghi and M. Santarsiero in Optics Letters, Vol. 22(5), 262 (1997). Additional information can also be found in the international standards ISO 11146-1:2005(E) entitled "Lasers and laser-related equipment-Test methods for laser beam widths, divergence angles and beam propagation ratios-Part 1: Stigmatic and simple astigmatic beams", ISO 11146-2:2005(E) entitled "Lasers and laser-related equipment-Test methods for laser beam widths, divergence angles and beam propagation ratios-Part 2: General astigmatic beams", and ISO 11146-3:2004(E) entitled "Lasers and laser-related equipment-Test methods for laser beam widths, divergence angles and beam propagation ratios-Part 3: Intrinsic and geometrical laser beam classification, propagation and details of test methods".

The spatial coordinates of the centroid of the intensity profile of the pulsed laser beam 112 having a time-averaged intensity profile *I*(*x, y, z*) are given by the following expressions: $\overline{x} \left(z\right) = \frac{{\int }_{- ∞}^{∞} {\int }_{- ∞}^{∞} xI \left(x, y, z\right) dxdy}{{\int }_{- ∞}^{∞} {\int }_{- ∞}^{∞} I \left(x, y, z\right) dxdy}$ (1) $\overline{y} \left(z\right) = \frac{{\int }_{- ∞}^{∞} {\int }_{- ∞}^{∞} yI \left(x, y, z\right) dxdy}{{\int }_{- ∞}^{∞} {\int }_{- ∞}^{∞} I \left(x, y, z\right) dxdy}$ (2)

These are also known as the first moments of the Wigner distribution and are described in Section 3.5 of ISO 11146-2:2005(E). Their measurement is described in Section 7 of ISO 11146-2:2005(E).

Variance is a measure of the width, in the cross-sectional (X-Y) plane, of the intensity distribution of the pulsed laser beam 112 as a function of position z in the direction of beam propagation. For an arbitrary laser beam, variance in the X-direction may differ from variance in the Y-direction. We let ${σ}_{x}^{2} \left(z\right)$ and ${σ}_{y}^{2} \left(z\right)$ represent the variances in the X-direction and Y-direction, respectively. Of particular interest are the variances in the near field and far field limits. We let ${σ}_{0 x}^{2} \left(z\right)$ and ${σ}_{0 y}^{2} \left(z\right)$ represent variances in the X-direction and Y-direction, respectively, in the near field limit, and we let ${σ}_{∞x}^{2} \left(z\right)$ and ${σ}_{∞y}^{2} \left(z\right)$ represent variances in the X-direction and Y-direction, respectively, in the far field limit. For a laser beam having a time-averaged intensity profile *I*(*x, y, z*) with Fourier transform *Ĩ*(*vₓ*, *v_{y}*) (where *vₓ* and *v_{y}* are spatial frequencies in the X-direction and Y-direction, respectively), the near field and far field variances in the X-direction and Y-direction are given by the following expressions: ${σ}_{0 x}^{2} \left(z\right) = \frac{{\int }_{- ∞}^{∞} {\int }_{- ∞}^{∞} {x}^{2} I \left(x, y, z\right) dxdy}{{\int }_{- ∞}^{∞} {\int }_{- ∞}^{∞} I \left(x, y, z\right) dxdy}$ (3) ${σ}_{0 y}^{2} \left(z\right) = \frac{{\int }_{- ∞}^{∞} {\int }_{- ∞}^{∞} {y}^{2} I \left(x, y, z\right) dxdy}{{\int }_{- ∞}^{∞} {\int }_{- ∞}^{∞} I \left(x, y, z\right) dxdy}$ (4) ${σ}_{∞x}^{2} = \frac{{\int }_{- ∞}^{∞} {\int }_{- ∞}^{∞} {υ}_{y}^{2} {I}^{˜} \left({ν}_{x}, {ν}_{y}\right) {dν}_{x} {dν}_{y}}{{\int }_{- ∞}^{∞} {\int }_{- ∞}^{∞} {I}^{˜} \left({ν}_{x}, {ν}_{y}\right) {dν}_{x} {dν}_{y}}$ (5) ${σ}_{∞y}^{2} = \frac{{\int }_{- ∞}^{∞} {\int }_{- ∞}^{∞} {υ}_{y}^{2} {I}^{˜} \left({ν}_{x}, {ν}_{y}\right) {dν}_{x} {dν}_{y}}{{\int }_{- ∞}^{∞} {\int }_{- ∞}^{∞} {I}^{˜} \left({ν}_{x}, {ν}_{y}\right) {dν}_{x} {dν}_{y}}$ (6)

The variance quantities ${σ}_{0 x}^{2} \left(z\right) , {σ}_{0 y}^{2} \left(z\right) , {σ}_{∞x}^{2}$, and ${σ}_{∞y}^{2}$ are also known as the diagonal elements of the Wigner distribution (see ISO 11146-2:2005(E)). These variances can be quantified for an experimental laser beam using the measurement techniques described in Section 7 of ISO 11146-2:2005(E). In brief, the measurement uses a linear unsaturated pixelated detector to measure *I*(*x, y)* over a finite spatial region that approximates the infinite integration area of the integral equations which define the variances and the centroid coordinates. The appropriate extent of the measurement area, background subtraction and the detector pixel resolution are determined by the convergence of an iterative measurement procedure described in Section 7 of ISO 11146-2:2005(E). The numerical values of the expressions given by equations 1-6 are calculated numerically from the array of intensity values as measured by the pixelated detector.

Through the Fourier transform relationship between the transverse amplitude profile *ũ*(*x, y, z*) for an arbitrary optical beam (where *I*(*x*, *y*, *z*) ≡ |*ũ*(*x, y, z*)|²) and the spatial-frequency distribution *P̃*(*vₓ, v_{y}, z*) for an arbitrary optical beam (where *Ĩ*(*vₓ, v_{y}*) ≡ |*P̃*(*vₓ, v_{y}, z*)|²), it can be shown that: ${σ}_{x}^{2} \left(z\right) = {σ}_{0 x}^{2} \left({z}_{0 x}\right) + {λ}^{2} {σ}_{∞x}^{2} {\left(z-{z}_{0 x}\right)}^{2}$ (7) ${σ}_{y}^{2} \left(z\right) = {σ}_{0 y}^{2} \left({z}_{0 y}\right) + {λ}^{2} {σ}_{∞y}^{2} {\left(z-{z}_{0 y}\right)}^{2}$ (8)

In equations (7) and (8), ${σ}_{0 x}^{2} \left({z}_{0 x}\right)$ and ${σ}_{0 y}^{2} \left({z}_{0 y}\right)$ are minimum values of ${σ}_{0 x}^{2} \left(z\right)$ and ${σ}_{0 y}^{2} \left(z\right)$, which occur at waist positions *z*_{o*x*} and *z*_{0*y*} in the x-direction and *y*-direction, respectively, and λ is the wavelength of the pulsed laser beam 112. Equations (7) and (8) indicate that ${σ}_{x}^{2} \left(z\right)$ and ${σ}_{y}^{2} \left(z\right)$ increase quadratically with z in either direction from the minimum values associated with the waist position of the pulsed laser beam 112 (e.g., the waist portion of the pulsed laser beam focal line 113). Further, in the embodiments described herein comprising a beam spot 114 that is axisymmetric and thereby comprises an axisymmetric intensity distribution I(x,y), ${σ}_{x}^{2} \left(z\right) = {σ}_{y}^{2} \left(z\right)$ and in the embodiments described herein comprising a beam spot 114 that is non-axisymmetric and thereby comprises a non-axisymmetric intensity distribution I(x,y), ${σ}_{x}^{2} \left(z\right) \neq {σ}_{y}^{2} \left(z\right)$, i.e., ${σ}_{x}^{2} \left(z\right) < {σ}_{y}^{2} \left(z\right)$ or ${σ}_{x}^{2} \left(z\right) > {σ}_{y}^{2} \left(z\right)$ .

Equations (7) and (8) can be rewritten in terms of a beam propagation factor *M*², where separate beam propagations factors ${M}_{x}^{2}$ and ${M}_{y}^{2}$ for the x-direction and the *y*-direction are defined as: ${M}_{x}^{2} ≡ 4 {πσ}_{0 x} {σ}_{∞x}$ (9) ${M}_{y}^{2} ≡ 4 {πσ}_{0 y} {σ}_{∞y}$ (10)

Rearrangement of Equations (9) and (10) and substitution into Equations (7) and (8) yields: ${σ}_{x}^{2} \left(z\right) = {σ}_{0 x}^{2} \left({z}_{0 x}\right) + \frac{{λ}^{2} {M}_{x}^{4}}{{\left(4{πσ}_{0 x}\right)}^{2}} {\left(z-{z}_{0 x}\right)}^{2}$ (11) ${σ}_{y}^{2} \left(z\right) = {σ}_{0 y}^{2} \left({z}_{0 y}\right) + \frac{{λ}^{2} {M}_{y}^{4}}{{\left(4{πσ}_{0 y}\right)}^{2}} {\left(z-{z}_{0 y}\right)}^{2}$ (12) which can be rewritten as: ${σ}_{x}^{2} \left(z\right) = {σ}_{0 x}^{2} \left({z}_{0 x}\right) \left[1+\frac{{\left(z-{z}_{0 x}\right)}^{2}}{{Z}_{Rx}^{2}}\right]$ (13) ${σ}_{y}^{2} \left(z\right) = {σ}_{0 y}^{2} \left({z}_{0 y}\right) \left[1+\frac{{\left(z-{z}_{0 y}\right)}^{2}}{{Z}_{Ry}^{2}}\right]$ (14) where the Rayleigh ranges *Z_{Rx}* and *Z_{Ry}* in the x-direction and y-direction, respectively, are given by: ${Z}_{Rx} = \frac{4 {πσ}_{0 x}^{2}}{{M}_{x}^{2} λ}$ (15) ${Z}_{Ry} = \frac{4 {πσ}_{0 y}^{2}}{{M}_{y}^{2} λ}$ (16)

The Rayleigh range corresponds to the distance (relative to the position of the beam waist as defined in Section 3.12 of ISO 11146-1:2005(E)) over which the variance of the laser beam doubles (relative to the variance at the position of the beam waist) and is a measure of the divergence of the cross sectional area of the laser beam. Further, in the embodiments described herein comprising a beam spot 114 that is axisymmetric and thereby comprises an axisymmetric intensity distribution I(x,y), *Z_{Rx} = Z_{Ry}* and in the embodiments described herein comprising a beam spot 114 that is non-axisymmetric and thereby comprises a non-axisymmetric intensity distribution I(x,y), *Z_{Rx} ≠ Z_{Ry},* i.e., *Z_{Rx} < Z_{Ry}* or *Z_{Rx} > Z_{Ry}.* The Rayleigh range can also be observed as the distance along the beam axis at which the optical intensity decays to one half of its value observed at the beam waist location (location of maximum intensity). Laser beams with large Rayleigh ranges have low divergence and expand more slowly with distance in the beam propagation direction than laser beams with small Rayleigh ranges.

The formulas above can be applied to any laser beam (not just Gaussian beams) by using the intensity profile *I*(*x, y, z*) that describes the laser beam. In the case of the TEM₀₀ mode of a Gaussian beam, the intensity profile is given by: $I \left(x, y\right) = \frac{\sqrt{π}}{2} {w}_{o} {e}^{\frac{- 2 \left({x}^{2}+{y}^{2}\right)}{{w}_{o}^{2}}}$ (17) where *wₒ* is the radius (defined as the radius at which beam intensity decreases to 1/e² of the peak beam intensity of the beam at a beam waist position *zₒ*. From Equation (17) and the above formulas, we obtain the following results for a TEM₀₀ Gaussian beam: ${σ}_{0 x}^{2} = {σ}_{0 y}^{2} = \frac{{w}_{o}^{2}}{4}$ (18) ${σ}_{∞x}^{2} = {σ}_{∞y}^{2} = \frac{1}{4 {π}^{2} {w}_{o}^{2}}$ (19) ${M}_{x}^{2} = 4 {πσ}_{0 x} {σ}_{∞x} = 1$ (20) ${M}_{y}^{2} = 4 {πσ}_{0 y} {σ}_{∞y} = 1$ (21) ${Z}_{Rx} = \frac{4 {πσ}_{0 x}^{2}}{{M}_{x}^{2} λ} = \frac{{πw}_{0}^{2}}{λ}$ (22) ${Z}_{Ry} = \frac{4 {πσ}_{0 y}^{2}}{{M}_{y}^{2} λ} = \frac{{πw}_{0}^{2}}{λ}$ (23) ${w}^{2} \left(z\right) = {w}_{0}^{2} + \frac{{λ}^{2}}{{\left({πw}_{0}\right)}^{2}} {\left(z-{z}_{0}\right)}^{2} = {w}_{0}^{2} \left[1+\frac{{\left(z-{z}_{0}\right)}^{2}}{{Z}_{R}^{2}}\right]$ (24) where *Z_{R} = Z_{Rx} = Z_{Ry}.* For Gaussian beams, it is further noted that ${M}^{2} = {M}_{x}^{2} = {M}_{y}^{2} = 1$.

Beam cross section is characterized by shape and dimensions. The dimensions of the beam cross section are characterized by a spot size of the beam. For a Gaussian beam, spot size is frequently defined as the radial extent at which the intensity of the beam decreases to 1/e² of its maximum value, denoted in Equation (17) as *w*₀. The maximum intensity of a Gaussian beam occurs at the center (*x =* 0 and *y* = 0 (Cartesian) or *r* = 0 (cylindrical)) of the intensity distribution and radial extent used to determine spot size is measured relative to the center.

Beams with axisymmetric (i.e. rotationally symmetric around the beam propagation axis Z) cross sections can be characterized by a single dimension or spot size that is measured at the beam waist location as specified in Section 3.12 of ISO 11146-1:2005(E). For a Gaussian beam, Equation (17) shows that spot size is equal to *wₒ*, which from Equation (18) corresponds to 2*σ*_{0*x*} or 2σ_{0*y*}. For an axisymmetric beam having an axisymmetric cross section, such as a circular cross section, *σ*₀*ₓ = σ*₀*_{y}.* Thus, for axisymmetric beams, the cross section dimension may be characterized with a single spot size parameter, where *wₒ* = 2*σ*₀. Spot size can be similarly defined for non-axisymmetric beam cross sections where, unlike an axisymmetric beam, σ_{0*x*} ≠ *σ*_{0*y*}. Thus, when the spot size of the beam is non-axisymmetric, it is necessary to characterize the cross-sectional dimensions of a non-axisymmetric beam with two spot size parameters: *w*_{o*x*} and *w_{oy}* in the x-direction and y-direction, respectively, where ${w}_{ox} = 2 {σ}_{0 x}$ (25) ${w}_{oy} = 2 {σ}_{0 y}$ (26)

Further, the lack of axial (i.e. arbitrary rotation angle) symmetry for a non-axisymmetric beam means that the results of a calculation of values of *σ*_{0*x*} and σ_{0*y*} will depend on the choice of orientation of the X-axis and Y-axis. ISO 11146-1:2005(E) refers to these reference axes as the principal axes of the power density distribution (Section 3.3-3.5) and in the following discussion we will assume that the X and Y axes are aligned with these principal axes. Further, an angle ϕ about which the X-axis and Y-axis may be rotated in the cross-sectional plane (e.g., an angle of the X-axis and Y-axis relative to reference positions for the X-axis and Y-axis, respectively) may be used to define minimum (*w_{o,min}*) and maximum values (*w_{o,max}*) of the spot size parameters for a non-axisymmetric beam: ${w}_{o , min} = 2 {σ}_{0 , min}$ (27) ${w}_{o , max} = 2 {σ}_{0 , max}$ (28) where 2σ_{0,*min*} = *2σ*_{0*x*}(*ϕ_{min,x}*) = 2σ_{0*y*}(*ϕ_{min,y}*) and 2*σ*_{0,*max*} = 2σ_{0*x*}(*ϕ_{max,x}*) = 2*σ*_{0*y*}(*φ_{max,y}*) The magnitude of the axial asymmetry of the beam cross section can be quantified by the aspect ratio, where the aspect ratio is defined as the ratio of *w_{o,max}* to *w*_{*o*,*min*}. An axisymmetric beam cross section has an aspect ratio of 1.0, while elliptical and other non-axisymmetric beam cross sections have aspect ratios greater than 1.0, for example, greater than 1.1, greater than 1.2, greater than 1.3, greater than 1.4, greater than 1.5, greater than 1.6, greater than 1.7, greater than 1.8, greater than 1.9, greater than 2.0, greater than 3.0, greater than 5.0, or greater than 10.0.

To promote uniformity of defects 172, 184 in the beam propagation direction (e.g. depth dimension of the transparent workpiece 160), a pulsed laser beam 112 having low divergence may be used. In one or more embodiments, pulsed laser beams 112 having low divergence may be utilized for forming defects 172, 184. As noted above, divergence can be characterized by the Rayleigh range. For non-axisymmetric beams, Rayleigh ranges for the principal axes X and Y are defined by Equations (15) and (16) for the X-direction and Y-direction, respectively, where it can be shown that for any real beam, ${M}_{x}^{2} > 1$ and ${M}_{y}^{2} > 1$ and where ${σ}_{0 x}^{2}$ and ${σ}_{0 y}^{2}$ are determined by the intensity distribution of the laser beam. For symmetric beams, Rayleigh range is the same in the X-direction and Y-direction and is expressed by Equation (22) or Equation (23). Low divergence correlates with large values of the Rayleigh range and weak diffraction of the laser beam.

Beams with Gaussian intensity profiles may be less preferred for laser processing to form defects 172, 184 because, when focused to small enough spot sizes (such as spot sizes in the range of microns, such as about 1-5 µm or about 1-10 µm) to enable available laser pulse energies to modify materials such as glass, they are highly diffracting and diverge significantly over short propagation distances. To achieve low divergence, it is desirable to control or optimize the intensity distribution of the pulsed laser beam to reduce diffraction. Pulsed laser beams may be non-diffracting or weakly diffracting. Weakly diffracting laser beams include quasi-non-diffracting laser beams. Representative weakly diffracting laser beams include Bessel beams, Gauss-Bessel beams, Airy beams, Weber beams, and Mathieu beams.

For non-axisymmetric beams, the Rayleigh ranges *Z_{Rx}* and *Z_{Ry}* are unequal. Equations (15) and (16) indicate that *Z_{Rx}* and *Z_{Ry}* depend on *σ*_{0*x*} and σ_{0*y*}, respectively, and above we noted that the values of *σ*_{0*x*} and σ_{0*y*} depend on the orientation of the X-axis and Y-axis. The values of *Z_{Rx}* and *Z_{Ry}* will accordingly vary, and each will have a minimum value and a maximum value that correspond to the principal axes, with the minimum value of *Z_{Rx}* being denoted as *Z_{Rx,min}* and the minimum value of *Z_{Ry}* being denoted *Z_{Ry,min}* for an arbitrary beam profile *Z_{Rx,min}* and *Z_{Ry,min}* can be shown to be given by ${Z}_{Rx , min} = \frac{4 {πσ}_{0 , min}^{2}}{{M}_{x}^{2} λ}$ (29) and ${Z}_{Ry , min} = \frac{4 {πσ}_{0 , min}^{2}}{{M}_{y}^{2} λ}$ (30)

Since divergence of the laser beam occurs over a shorter distance in the direction having the smallest Rayleigh range, the intensity distribution of the pulsed laser beam 112 used to form defects 172 may be controlled so that the minimum values of *Z_{Rx}* and *Z_{Ry}* (or for axisymmetric beams, the value of *Z_{R}* ) are as large as possible. Since the minimum value *Z_{Rx,min}* of *Z_{Rx}* and the minimum value *Z_{Ry,min}* of *Z_{Ry}* differ for a non-axisymmetric beam, a pulsed laser beam 112 may be used with an intensity distribution that makes the smaller of *Z_{Rx,min}* and *Z_{Ry,min}* as large as possible when forming damage regions.

In different embodiments, the smaller of *Z_{Rx,min}* and *Z_{Ry,min}* (or for axisymmetric beams, the value of *Z_{R}* ) is greater than or equal to 50 µm, greater than or equal to 100 µm, greater than or equal to 200 µm, greater than or equal to 300 µm, greater than or equal to 500 µm, greater than or equal to 1 mm, greater than or equal to 2 mm, greater than or equal to 3 mm, greater than or equal to 5 mm, in the range from 50 µm to 10 mm, in the range from 100 µm to 5 mm, in the range from 200 µm to 4 mm, or in the range from 300 µm to 2 mm.

The values and ranges for the smaller of *Z_{Rx,min}* and *Z_{Ry,min}* (or for axisymmetric beams, the value of *Z_{R}* ) specified herein are achievable for different wavelengths to which the workpiece is transparent through adjustment of the spot size parameter *w_{o,min}* defined in Equation (27). In different embodiments, the spot size parameter *w_{o,min}* is greater than or equal to 0.25 µm, greater than or equal to 0.50 µm, greater than or equal to 0.75 µm, greater than or equal to 1.0 µm, greater than or equal to 2.0 µm, greater than or equal to 3.0 µm, greater than or equal to 5.0 µm, in the range from 0.25 µm to 10 µm, in the range from 0.25 µm to 5.0 µm, in the range from 0.25 µm to 2.5 µm, in the range from 0.50 µm to 10 µm, in the range from 0.50 µm to 5.0 µm, in the range from 0.50 µm to 2.5 µm, in the range from 0.75 µm to 10 µm, in the range from 0.75 µm to 5.0 µm, or in the range from 0.75 µm to 2.5 µm.

Non-diffracting or quasi non-diffracting beams generally have complicated intensity profiles, such as those that decrease non-monotonically vs. radius. By analogy to a Gaussian beam, an effective spot size *w_{o,eff}* can be defined for non-axisymmetric beams as the shortest radial distance, in any direction, from the radial position of the maximum intensity (r = 0) at which the intensity decreases to 1/e² of the maximum intensity. Further, for axisymmetric beams *w_{o,eff}* is the radial distance from the radial position of the maximum intensity (r = 0) at which the intensity decreases to 1/e² of the maximum intensity. A criterion for Rayleigh range based on the effective spot size *w_{o,eff}* for non-axisymmetric beams or the spot size *wₒ* for axisymmetric beams can be specified as non-diffracting or quasi non-diffracting beams for forming damage regions using equation (31) for non-axisymmetric beams of equation (32) for axisymmetric beams, below: $Smaller of {Z}_{Rx , min} , {Z}_{Ry , min} > {F}_{D} \frac{{πw}_{0 , eff}^{2}}{λ}$ (31) ${Z}_{R} > {F}_{D} \frac{{πw}_{0}^{2}}{λ}$ (32) where *F_{D}* is a dimensionless divergence factor having a value of at least 10, at least 50, at least 100, at least 250, at least 500, at least 1000, in the range from 10 to 2000, in the range from 50 to 1500, or in the range from 100 to 1000. By comparing Equation (31) to Equation (22) or (23), one can see that for a non-diffracting or quasi non-diffracting beam the distance, *Smaller of Z_{Rx,min}, Z_{Ry,min}* in Equation (31), over which the effective beam size doubles, is *F_{D}* times the distance expected if a typical Gaussian beam profile were used. The dimensionless divergence factor *F_{D}* provides a criterion for determining whether or not a laser beam is quasi-non-diffracting. As used herein, the pulsed laser beam 112 is considered quasi-non-diffracting if the characteristics of the laser beam satisfy Equation (31) or Equation (32) with a value of *F_{D}* ≥ 10. As the value of *F_{D}* increases, the pulsed laser beam 112 approaches a more nearly perfectly non-diffracting state. Moreover, it should be understood that Equation (32) is merely a simplification of Equation (31) and as such, Equation (31) mathematically describes the dimensionless divergence factor *F_{D}* for both axisymmetric and non-axisymmetric pulsed laser beams 112.

Referring now to FIG. 3, an optical assembly 100 for producing a pulsed laser beam 112 that is quasi-non-diffracting and forms the pulsed laser beam focal line 113 at the transparent workpiece 160 using the aspheric optical element 120 (e.g., an axicon 122) is schematically depicted. The optical assembly 100 includes a beam source 110 that outputs the pulsed laser beam 112, and a first and second lens 130, 132.

Further, the transparent workpiece 160 may be positioned such that the pulsed laser beam 112 output by the beam source 110 irradiates the transparent workpiece 160, for example, after traversing the aspheric optical element 120 and thereafter, both the first lens 130 and the second lens 132. An optical axis 102 extends between the beam source 110 and the transparent workpiece 160 along the Z-axis such that when the beam source 110 outputs the pulsed laser beam 112, the beam pathway 111 of the pulsed laser beam 112 extends along the optical axis 102. As used herein "upstream" and "downstream" refer to the relative position of two locations or components along the beam pathway 111 with respect to the beam source 110. For example, a first component is upstream from a second component if the pulsed laser beam 112 traverses the first component before traversing the second component. Further, a first component is downstream from a second component if the pulsed laser beam 112 traverses the second component before traversing the first component.

Referring still to FIG. 3, the beam source 110 may comprise any known or yet to be developed beam source 110 configured to output pulsed laser beams 112. In operation, the defects 172, 184 of the respective contour line 170, 180 (FIGS. 1A and 2A) are produced by interaction of the transparent workpiece 160 with the pulsed laser beam 112 output by the beam source 110. In embodiments, the beam source 110 may output a pulsed laser beam 112 comprising a wavelength of for example, 1064 nm, 1030 nm, 532 nm, 530 nm, 355 nm, 343 nm, or 266 nm, or 215 nm. Further, the pulsed laser beam 112 used to form defects 172, 184 in the transparent workpiece 160 may be well suited for materials that are transparent to the selected pulsed laser wavelength.

Suitable laser wavelengths for forming defects 172, 184 are wavelengths at which the combined losses of linear absorption and scattering by the transparent workpiece 160 are sufficiently low. In embodiments, the combined losses due to linear absorption and scattering by the transparent workpiece 160 at the wavelength are less than 20%/mm, or less than 15%/mm, or less than 10%/mm, or less than 5%/mm, or less than 1%/mm, where the dimension "/mm" means per millimeter of distance within the transparent workpiece 160 in the beam propagation direction of the pulsed laser beam 112 (e.g., the Z direction). Representative wavelengths for many glass workpieces include fundamental and harmonic wavelengths of Nd³⁺ (e.g. Nd³⁺:YAG or Nd³⁺:YVO₄ having fundamental wavelength near 1064 nm and higher order harmonic wavelengths near 532 nm, 355 nm, and 266 nm). Other wavelengths in the ultraviolet, visible, and infrared portions of the spectrum that satisfy the combined linear absorption and scattering loss requirement for a given substrate material can also be used.

In operation, the pulsed laser beam 112 output by the beam source 110 may create multi-photon absorption (MPA) in the transparent workpiece 160. MPA is the simultaneous absorption of two or more photons of identical or different frequencies that excites a molecule from one state (usually the ground state) to a higher energy electronic state (i.e., ionization). The energy difference between the involved lower and upper states of the molecule is equal to the sum of the energies of the involved photons. MPA, also called induced absorption, can be a second-order or third-order process (or higher order), for example, that is several orders of magnitude weaker than linear absorption. It differs from linear absorption in that the strength of second-order induced absorption may be proportional to the square of the light intensity, for example, and thus it is a nonlinear optical process.

The perforation step that creates the contour line 170, 180 (FIGS. 1A and 2A) may utilize the beam source 110 (e.g., an ultra-short pulse laser) in combination with the aspheric optical element 120, the first lens 130, and the second lens 132, to project the beam spot 114 on the transparent workpiece 160 and generate the pulsed laser beam focal line 113. The pulsed laser beam focal line 113 comprises a quasi non-diffracting beam, such as a Gauss-Bessel beam or Bessel beam, as defined above, and may fully perforate the transparent workpiece 160 to form defects 172, 184 in the transparent workpiece 160, which may form the respective contour line 170, 180. In embodiments, the pulse duration of the individual pulses is in a range of from about 1 femtosecond to about 200 picoseconds, such as from about 1 picosecond to about 100 picoseconds, or 5 picoseconds to about 20 picoseconds, and the repetition rate of the individual pulses may be in a range from about 1 kHz to 4 MHz, such as in a range from about 10 kHz to about 3 MHz, or from about 10 kHz to about 650 kHz.

Referring again to FIG. 3, the aspheric optical element 120 is positioned within the beam pathway 111 between the beam source 110 and the transparent workpiece 160. In operation, propagating the pulsed laser beam 112, e.g., an incoming Gaussian beam, through the aspheric optical element 120 may alter the pulsed laser beam 112 such that the portion of the pulsed laser beam 112 propagating beyond the aspheric optical element 120 is quasi-non-diffracting, as described above. The aspheric optical element 120 may comprise any optical element comprising an aspherical shape. In embodiments, the aspheric optical element 120 may comprise a conical wavefront producing optical element, such as an axicon lens, for example, a negative refractive axicon lens, a positive refractive axicon lens, a reflective axicon lens, a diffractive axicon lens, a programmable spatial light modulator axicon lens (e.g., a phase axicon), or the like.

In embodiments, the aspheric optical element 120 comprises at least one aspheric surface whose shape is mathematically described as: $z ′ = \left(\frac{{cr}^{2}}{1}\right) + \left(1-\left(1+\right.\right.$ ${\left.\left.k\right)\left({c}^{2}{r}^{2}\right)\right)}^{1 / 2} + \left({a}_{1}r+{a}_{2}{r}^{2}+{a}_{3}{r}^{3}+{a}_{4}{r}^{4}+{a}_{5}{r}^{5}+{a}_{6}{r}^{6}+{a}_{7}{r}^{7}+{a}_{8}{r}^{8}+{a}_{9}{r}^{9}+\right.$ ${a}_{10} {r}^{10} + {a}_{11} {r}^{11} + {a}_{12} {r}^{12}$ where z' is the surface sag of the aspheric surface, r is the distance between the aspheric surface and the optical axis 102 in a radial direction (e.g., in an X-direction or a Y-direction), c is the surface curvature of the aspheric surface (i.e. *cᵢ*=1/*Rᵢ*, where R is the surface radius of the aspheric surface), k is the conic constant, and coefficients *aᵢ* are the first through the twelfth order aspheric coefficients or higher order aspheric coefficients (polynomial aspheres) describing the aspheric surface. In one example embodiment, at least one aspheric surface of the aspheric optical element 120 includes the following coefficients *a*₁-*a*₇, respectively: -0.085274788; 0.065748845; 0.077574995; -0.054148636; 0.022077021; - 0.0054987472; 0.0006682955; and the aspheric coefficients *a*₈-*a*₁₂ are 0. In this embodiment, the at least one aspheric surface has the conic constant k = 0. However, because the *a*₁ coefficient has a nonzero value, this is equivalent to having a conic constant k with a non-zero value. Accordingly, an equivalent surface may be described by specifying a conic constant k that is non zero, a coefficient *a*₁ that is non-zero, or a combination of a nonzero k and a non-zero coefficient *a*₁. Further, in embodiments, the at least one aspheric surface is described or defined by at least one higher order aspheric coefficients *a*₂-*a*₁₂ with non-zero value (i.e., at least one of *a*₂, *a*₃ *...* , *a*₁₂≠0). In one example embodiment, the aspheric optical element 120 comprises a third-order aspheric optical element such as a cubically shaped optical element, which comprises a coefficient *a*₃ that is non-zero.

In embodiments, when the aspheric optical element 120 comprises an axicon 122 (as depicted in FIG. 3), the axicon 122 may have a laser output surface 126 (e.g., conical surface) having an angle of about 1.2°, such as from about 0.5° to about 5°, or from about 1° to about 1.5°, or even from about 0.5° to about 20°, the angle measured relative to the laser input surface 124 (e.g., flat surface) upon which the pulsed laser beam 112 enters the axicon 122. Further, the laser output surface 126 terminates at a conical tip. Moreover, the aspheric optical element 120 includes a centerline axis 125 extending from the laser input surface 124 to the laser output surface 126 and terminating at the conical tip. In other embodiments, the aspheric optical element 120 may comprise an axicon, a spatial phase modulator such as a spatial light modulator, or a diffractive optical grating. In operation, the aspheric optical element 120 shapes the incoming pulsed laser beam 112 (e.g., an incoming Gaussian beam) into a quasi-non-diffracting beam, which, in turn, is directed through the first lens 130 and the second lens 132.

Referring still to FIG. 3, the first lens 130 is positioned upstream the second lens 132 and may collimate the pulsed laser beam 112 within a collimation space 134 between the first lens 130 and the second lens 132. Further, the second lens 132 may focus the pulsed laser beam 112 into the transparent workpiece 160, which may be positioned at an imaging plane 104. In embodiments, the first lens 130 and the second lens 132 each comprise plano-convex lenses. When the first lens 130 and the second lens 132 each comprise plano-convex lenses, the curvature of the first lens 130 and the second lens 132 may each be oriented toward the collimation space 134. In other embodiments, the first lens 130 may comprise other collimating lenses and the second lens 132 may comprise a meniscus lens, an asphere, or another higher-order corrected focusing lens.

Referring again to FIGS. 1A-3, a pulsed laser beam 112 is directed oriented along the beam pathway 111 and output by the beam source 110 into the transparent workpiece 160 such that the portion of the pulsed laser beam 112 directed into the transparent workpiece 160 generates an induced absorption within the transparent workpiece and the induced absorption produces defects 172, 184 within the transparent workpiece 160. For example, the pulsed laser beam 112 may comprise a pulse energy and a pulse duration sufficient to exceed a damage threshold of the transparent workpiece 160. In embodiments, directing the pulsed laser beam 112 into the transparent workpiece 160 comprises focusing the pulsed laser beam 112 output by the beam source 110 into the pulsed laser beam focal line 113 oriented along the beam propagation direction (e.g., the Z axis). The transparent workpiece 160 is positioned in the beam pathway 111 to at least partially overlap the pulsed laser beam focal line 113 of pulsed laser beam 112. The pulsed laser beam focal line 113 is thus directed into the transparent workpiece 160. The pulsed laser beam 112, e.g., the pulsed laser beam focal line 113 generates induced absorption within the transparent workpiece 160 to create the defects 172, 184 in the transparent workpiece 160. In embodiments, individual defects may be created at rates of several hundred kilohertz (i.e., several hundred thousand defects per second).

In embodiments, the aspheric optical element 120 may focus the pulsed laser beam 112 into the pulsed laser beam focal line 113. In operation, the position of the pulsed laser beam focal line 113 may be controlled by suitably positioning and/or aligning the pulsed laser beam 112 relative to the transparent workpiece 160 as well as by suitably selecting the parameters of the optical assembly 100. For example, the position of the pulsed laser beam focal line 113 may be controlled along the Z-axis and about the Z-axis. Further, the pulsed laser beam focal line 113 may have a length in a range of from about 0.1 mm to about 100 mm or in a range of from about 0.1 mm to about 10 mm. Various embodiments may be configured to have a pulsed laser beam focal line 113 with a length l of about 0.1 mm, about 0.2 mm, about 0.3 mm, about 0.4 mm, about 0.5 mm, about 0.7 mm, about 1 mm, about 2 mm, about 3 mm, about 4 mm, or about 5 mm e.g., from about 0.5 mm to about 5 mm.

Referring still to FIGS. 1A-2A, the method for forming the contour lines 170, 180 comprising defects 172, 184 may include translating the transparent workpiece 160 relative to the pulsed laser beam 112 (or the pulsed laser beam 112 may be translated relative to the transparent workpiece 160, for example, in the translation direction 101 depicted in FIGS. 1A and 2A). The defects 172, 184 penetrate the full depth of the glass. It should be understood that while sometimes described as "holes" or "hole-like," the defects 172 disclosed herein may generally not be void spaces, but are rather portions of the transparent workpiece 160 which has been modified by laser processing as described herein.

In embodiments, the defects 172, 184 may generally be spaced apart from one another by a distance along the contour line 170, 180 of from about 0.1 µm to about 500 µm, for example, about 1 µm to about 200 µm, about 2 µm to about 100 µm, or about 5 µm to about 20 µm. For example, suitable spacing between the defects may be from about 0.1 µm to about 50 µm, such as from about 5 µm to about 15 µm, from about 5 µm to about 12 µm, from about 7 µm to about 15 µm, or from about 7 µm to about 12 µm for the TFT/display glass compositions. In embodiments, a spacing between adjacent defects may be about 50 µm or less, 45 µm or less, 40 µm or less, 35 µm or less, 30 µm or less, 25 µm or less, 20 µm or less, 15 µm or less, 10 µm or less, or 5 µm or less. Further, the translation of the transparent workpiece 160 relative to the pulsed laser beam 112 may be performed by moving the transparent workpiece 160 and/or the beam source 110 using one or more translation stages 190.

Beyond the perforation of a single transparent workpiece 160, the process may also be used to perforate stacks of transparent workpieces 160, such as stacks of sheets of glass, and may fully perforate glass stacks of up to a few mm total height with a single laser pass. A single glass stack may be comprised of various glass types within the stack, for example one or more layers of soda-lime glass layered with one or more layers of Corning code 2318 glass. The glass stacks additionally may have air gaps in various locations. According to another embodiment, ductile layers such as adhesives may be disposed between the glass stacks. However, the pulsed laser process described herein will still, in a single pass, fully perforate both the upper and lower glass layers of such a stack.

## Claims

1. A method for processing a transparent workpiece (160), the method comprising:
forming a first contour line (170) in the transparent workpiece (160), the first contour line (170) comprising a first plurality of defects in the transparent workpiece (160) such that the first contour line (170) defines a first contour, wherein forming the first contour line (170) comprises:
directing a first pulsed laser beam (112) oriented along a beam pathway (111) and output by a beam source (110) through an aspheric optical element (120) and into the transparent workpiece (160) such that a portion of the first pulsed laser beam (112) directed into the transparent workpiece (160) generates an induced absorption within the transparent workpiece (160), the induced absorption creating a defect within the transparent workpiece (160); and
translating the transparent workpiece (160) and the first pulsed laser beam (112) relative to each other along the first contour line (170), thereby laser forming the first plurality of defects along the first contour line (170) within the transparent workpiece (160);
forming a second contour line (180) in the transparent workpiece (160), the second contour line (180) comprising a second plurality of defects in the transparent workpiece (160) such that the second contour line (180) defines a second contour intersecting the first contour line (170) at an intersection point (182), wherein forming the second contour line (180) comprises:
directing a second pulsed laser beam (112) oriented along a beam pathway (111) and output by a beam source (110) through an aspheric optical element (120) and into the transparent workpiece (160) such that a portion of the second pulsed laser beam (112) directed into the transparent workpiece (160) generates an induced absorption within the transparent workpiece (160), the induced absorption producing a modification of the transparent workpiece (160) along the second contour line (180) to create a defect within the transparent workpiece (160); and
translating the transparent workpiece (160) and the second pulsed laser beam (112) relative to each other along the second contour line (180), thereby laser forming the second plurality of defects along the contour line within the transparent workpiece (160),
wherein the laser pulse energy of the second pulsed laser beam (112) is increased from a first laser pulse energy to a second laser pulse energy at a first distance from the intersection point (182) where an optical area of the second pulsed laser beam (112) interacts with an optical area of the first contour line (170); and
wherein the laser pulse energy of the second pulsed laser beam (112) is decreasing from the second laser pulse energy to the first laser pulse energy at a second distance from the intersection point (182) where the optical area of the second pulsed laser beam (112) does not interact with the optical area of the first contour line (170).

2. The method of claim 1, wherein the portion of the first pulsed laser beam (112) directed into the transparent workpiece (160) comprises:
a wavelength λ;
a spot size *wₒ*; and
a cross section that comprises a Rayleigh range *Z_{R}* that is greater than ${F}_{D} \frac{{πw}_{0}^{2} ,}{λ}$, where *F_{D}* is a dimensionless divergence factor comprising a value of 10 or greater.

3. The method of claim 1 or claim 2, wherein the portion of the second pulsed laser beam (112) directed into the transparent workpiece (160) comprises:
a wavelength λ;
a spot size *wₒ*; and
a cross section that comprises a Rayleigh range *Z_{R}* that is greater than ${F}_{D} \frac{{πw}_{0}^{2} ,}{λ}$, where *F_{D}* is a dimensionless divergence factor comprising a value of 10 or greater

4. The method of any one of claims 1-3, wherein the second laser pulse energy is twice the first laser pulse energy.

5. The method of any one of claims 1-4, wherein the first distance is about 100 µm to about 500 µm.

6. The method of any one of claims 1-5, wherein the second distance is about 100 µm to about 500 µm.

7. The method of claim 1, wherein the first pulsed laser beam (112) and second pulsed laser beam (112) has a wavelength λ and wherein the transparent workpiece (160) has combined losses due to linear absorption and scattering less than 20%/mm in the beam propagation direction.

8. The method of claim 1, wherein the first beam source (110) and second beam source (110) comprises respectively a first pulsed beam source and a second pulsed beam source that produces pulse bursts with from about 2 sub-pulses per pulse burst to about 30 sub-pulses per pulse burst and a pulse burst energy is from about 100 µJ to about 600 µJ per pulse burst.

9. A method for processing a transparent workpiece (160), the method comprising:
forming a first contour line (170) in the transparent workpiece (160), the first contour line (170) comprising a first plurality of defects in the transparent workpiece (160) such that the first contour line (170) defines a first contour, wherein forming the first contour line (170) comprises:
directing a first pulsed laser beam (112) oriented along a beam pathway (111) and output by a beam source (110) through an aspheric optical element (120) and into the transparent workpiece (160) such that a portion of the first pulsed laser beam (112) directed into the transparent workpiece (160) generates an induced absorption within the transparent workpiece (160), the induced absorption producing a modification of the transparent workpiece (160) along the first contour line (170) to create a defect within the transparent workpiece (160); and
translating the transparent workpiece (160) and the first pulsed laser beam (112) relative to each other along the first contour line (170), thereby laser forming the first plurality of defects along the first contour line (170) within the transparent workpiece (160);
wherein the laser pulse energy of the first pulsed laser beam (112) is increased from the first laser pulse energy to the second laser pulse energy at a first distance to an edge of the transparent material where an optical area of the first pulsed laser beam (112) interacts with an optical area of the edge of the transparent material.

10. The method of claim 9, wherein the portion of the first pulsed laser beam (112) directed into the transparent workpiece (160) comprises:
a wavelength λ;
a spot size *wₒ*; and
a cross section that comprises a Rayleigh range *Z_{R}* that is greater than ${F}_{D} \frac{{πw}_{0}^{2} ,}{λ}$, where *F_{D}* is a dimensionless divergence factor comprising a value of 10 or greater.

11. The method of claim 9 or claim 10, where in the second laser pulse energy is twice the first laser pulse energy.

12. The method of claim 9, wherein the first pulsed laser beam (112) and second pulsed laser beam (112) has a wavelength λ and wherein the transparent workpiece (160) has combined losses due to linear absorption and scattering less than 20%/mm in the beam propagation direction.

13. The method of claim 9, wherein the first beam source (110) and second beam source (110) comprises respectively a first pulsed beam source and a second pulsed beam source that produces pulse bursts with from about 2 sub-pulses per pulse burst to about 30 sub-pulses per pulse burst and a pulse burst energy is from about 100 µJ to about 600 µJ per pulse burst.

## Patentansprüche

1. Ein Verfahren zum Bearbeiten eines transparenten Werkstücks (160), wobei das Verfahren aufweist:
Bilden einer ersten Konturlinie (170) in dem transparenten Werkstück (160), wobei die erste Konturlinie (170) eine erste Mehrzahl von Defekten in dem transparenten Werkstück (160) aufweist, so dass die erste Konturlinie (170) eine erste Kontur definiert, wobei das Bilden der ersten Konturlinie (170) aufweist:
Richten eines ersten gepulsten Laserstrahls (112), der entlang eines Strahlwegs (111) ausgerichtet ist und von einer Strahlquelle (110) ausgegeben wird, durch ein asphärisches optisches Element (120) und in das transparente Werkstück (160), so dass ein Teil des ersten gepulsten Laserstrahls (112), der in das transparente Werkstück (160) gerichtet ist, eine induzierte Absorption innerhalb des transparenten Werkstücks (160) erzeugt, wobei die induzierte Absorption einen Defekt innerhalb des transparenten Werkstücks (160) erzeugt; und
Verschieben des transparenten Werkstücks (160) und des ersten gepulsten Laserstrahls (112) relativ zueinander entlang der ersten Konturlinie (170), wodurch die erste Mehrzahl von Defekten entlang der ersten Konturlinie (170) innerhalb des transparenten Werkstücks (160) lasergebildet wird;
Bilden einer zweiten Konturlinie (180) in dem transparenten Werkstück (160), wobei die zweite Konturlinie (180) eine zweite Mehrzahl von Defekten in dem transparenten Werkstück (160) aufweist, so dass die zweite Konturlinie (180) eine zweite Kontur definiert, die die erste Konturlinie (170) an einem Schnittpunkt (182) schneidet, wobei das Bilden der zweiten Konturlinie (180) aufweist:
Richten eines zweiten gepulsten Laserstrahls (112), der entlang eines Strahlwegs (111) ausgerichtet ist und von einer Strahlquelle (110) ausgegeben wird, durch ein asphärisches optisches Element (120) und in das transparente Werkstück (160), so dass ein Teil des zweiten gepulsten Laserstrahls (112), der in das transparente Werkstück (160) gerichtet ist, eine induzierte Absorption innerhalb des transparenten Werkstücks (160) erzeugt, wobei die induzierte Absorption eine Modifikation des transparenten Werkstücks (160) entlang der zweiten Konturlinie (180) erzeugt, um einen Defekt innerhalb des transparenten Werkstücks (160) zu erzeugen; und
Verschieben des transparenten Werkstücks (160) und des zweiten gepulsten Laserstrahls (112) relativ zueinander entlang der zweiten Konturlinie (180), wodurch die zweite Mehrzahl von Defekten entlang der Konturlinie innerhalb des transparenten Werkstücks (160) lasergebildet wird,
wobei die Laserimpulsenergie des zweiten gepulsten Laserstrahls (112) von einer ersten Laserimpulsenergie auf eine zweite Laserimpulsenergie in einem ersten Abstand von dem Schnittpunkt (182) erhöht wird, wo ein optischer Bereich des zweiten gepulsten Laserstrahls (112) mit einem optischen Bereich der ersten Konturlinie (170) interagiert; und
wobei die Laserimpulsenergie des zweiten gepulsten Laserstrahls (112) von der zweiten Laserimpulsenergie auf die erste Laserimpulsenergie in einem zweiten Abstand von dem Schnittpunkt (182) verringert wird, wo der optische Bereich des zweiten gepulsten Laserstrahls (112) nicht mit dem optischen Bereich der ersten Konturlinie (170) interagiert.

2. Das Verfahren nach Anspruch 1, wobei der Teil des ersten gepulsten Laserstrahls (112), der in das transparente Werkstück (160) gerichtet ist, aufweist:
eine Wellenlänge λ;
eine Punktgröße *wₒ*; und
einen Querschnitt, der einen Rayleigh-Bereich *Z_{R}* aufweist, der größer als ${F}_{D} \frac{{πw}_{0}^{2} ,}{λ}$ ist, wobei *F_{D}* ein dimensionsloser Divergenzfaktor ist, der einen Wert von 10 oder größer aufweist.

3. Das Verfahren nach Anspruch 1 oder Anspruch 2, wobei der Teil des zweiten gepulsten Laserstrahls (112), der in das transparente Werkstück (160) gerichtet ist, aufweist:
eine Wellenlänge λ;
eine Punktgröße *wₒ*; und
einen Querschnitt, der einen Rayleigh-Bereich *Z_{R}* aufweist, der größer als ${F}_{D} \frac{{πw}_{0}^{2} ,}{λ}$ ist, wobei *F_{D}* ein dimensionsloser Divergenzfaktor ist, der einen Wert von 10 oder größer aufweist.

4. Das Verfahren nach einem der Ansprüche 1-3, wobei die zweite Laserimpulsenergie doppelt so groß ist wie die erste Laserimpulsenergie.

5. Das Verfahren nach einem der Ansprüche 1-4, wobei der erste Abstand etwa 100 µm bis etwa 500 µm beträgt.

6. Das Verfahren nach einem der Ansprüche 1-5, wobei der zweite Abstand etwa 100 µm bis etwa 500 µm beträgt.

7. Das Verfahren nach Anspruch 1, wobei der erste gepulste Laserstrahl (112) und der zweite gepulste Laserstrahl (112) eine Wellenlänge λ aufweisen und wobei das transparente Werkstück (160) kombinierte Verluste aufgrund von linearer Absorption und Streuung von weniger als 20%/mm in der Strahlausbreitungsrichtung aufweist.

8. Das Verfahren nach Anspruch 1, wobei die erste Strahlquelle (110) und die zweite Strahlquelle (110) jeweils eine erste gepulste Strahlquelle und eine zweite gepulste Strahlquelle aufweisen, die Impulsbursts mit von etwa 2 Teilimpulsen pro Impulsburst bis etwa 30 Teilimpulsen pro Impulsburst erzeugen und eine Impulsburstenergie von etwa 100 µJ bis etwa 600 µJ pro Impulsburst beträgt.

9. Ein Verfahren zum Bearbeiten eines transparenten Werkstücks (160), wobei das Verfahren aufweist:
Bilden einer ersten Konturlinie (170) in dem transparenten Werkstück (160), wobei die erste Konturlinie (170) eine erste Mehrzahl von Defekten in dem transparenten Werkstück (160) aufweist, so dass die erste Konturlinie (170) eine erste Kontur definiert, wobei das Bilden der ersten Konturlinie (170) aufweist:
Richten eines ersten gepulsten Laserstrahls (112), der entlang eines Strahlwegs (111) ausgerichtet ist und von einer Strahlquelle (110) ausgegeben wird, durch ein asphärisches optisches Element (120) und in das transparente Werkstück (160), so dass ein Teil des ersten gepulsten Laserstrahls (112), der in das transparente Werkstück (160) gerichtet ist, eine induzierte Absorption innerhalb des transparenten Werkstücks (160) erzeugt, wobei die induzierte Absorption eine Modifikation des transparenten Werkstücks (160) entlang der ersten Konturlinie (170) erzeugt, um einen Defekt innerhalb des transparenten Werkstücks (160) zu erzeugen; und
Verschieben des transparenten Werkstücks (160) und des ersten gepulsten Laserstrahls (112) relativ zueinander entlang der ersten Konturlinie (170), wodurch die erste Mehrzahl von Defekten entlang der ersten Konturlinie (170) innerhalb des transparenten Werkstücks (160) lasergebildet wird;
wobei die Laserimpulsenergie des ersten gepulsten Laserstrahls (112) von der ersten Laserimpulsenergie auf die zweite Laserimpulsenergie in einem ersten Abstand zu einem Rand des transparenten Materials erhöht wird, wo ein optischer Bereich des ersten gepulsten Laserstrahls (112) mit einem optischen Bereich des Rands des transparenten Materials interagiert.

10. Das Verfahren nach Anspruch 9, wobei der Teil des ersten gepulsten Laserstrahls (112), der in das transparente Werkstück (160) gerichtet ist, aufweist:
eine Wellenlänge λ;
eine Punktgröße *wₒ*; und
einen Querschnitt, der einen Rayleigh-Bereich *Z_{R}* aufweist, der größer als ${F}_{D} \frac{{πw}_{0}^{2} ,}{λ}$ ist, wobei *F_{D}* ein dimensionsloser Divergenzfaktor ist, der einen Wert von 10 oder größer aufweist.

11. Das Verfahren nach Anspruch 9 oder Anspruch 10, wobei die zweite Laserimpulsenergie doppelt so groß ist wie die erste Laserimpulsenergie.

12. Das Verfahren nach Anspruch 9, wobei der erste gepulste Laserstrahl (112) und der zweite gepulste Laserstrahl (112) eine Wellenlänge λ aufweisen und wobei das transparente Werkstück (160) kombinierte Verluste aufgrund von linearer Absorption und Streuung von weniger als 20%/mm in der Strahlausbreitungsrichtung aufweist.

13. Das Verfahren nach Anspruch 9, wobei die erste Strahlquelle (110) und die zweite Strahlquelle (110) jeweils eine erste gepulste Strahlquelle und eine zweite gepulste Strahlquelle aufweisen, die Impulsbursts mit von etwa 2 Teilimpulsen pro Impulsburst bis etwa 30 Teilimpulsen pro Impulsburst erzeugen und eine Impulsburstenergie von etwa 100 µJ bis etwa 600 µJ pro Impulsburst beträgt.

## Revendications

1. Procédé de traitement d'une pièce à usiner transparente (160), le procédé comprenant les étapes consistant à :
former une première ligne de contour (170) dans la pièce à usiner transparente (160), la première ligne de contour (170) comprenant une première pluralité de défauts dans la pièce à usiner transparente (160) de telle sorte que la première ligne de contour (170) définisse un premier contour, dans lequel la formation de la première ligne de contour (170) comprend les étapes consistant à :
diriger un premier faisceau laser pulsé (112) orienté le long d'un trajet de faisceau (111) et délivré en sortie par une source de faisceau (110) à travers un élément optique asphérique (120) et jusque dans la pièce à usiner transparente (160) de telle sorte qu'une partie du premier faisceau laser pulsé (112) dirigé jusque dans la pièce à usiner transparente (160) génère une absorption induite à l'intérieur de la pièce à usiner transparente (160), l'absorption induite créant un défaut à l'intérieur de la pièce à usiner transparente (160) ; et
déplacer en translation la pièce à usiner transparente (160) et le premier faisceau laser pulsé (112) l'un par rapport à l'autre le long de la première ligne de contour (170), en formant ainsi au laser la première pluralité de défauts le long de la première ligne de contour (170) à l'intérieur de la pièce à usiner transparente (160) ;
former une seconde ligne de contour (180) dans la pièce à usiner transparente (160), la seconde ligne de contour (180) comprenant une seconde pluralité de défauts dans la pièce à usiner transparente (160) de telle sorte que la seconde ligne de contour (180) définisse un second contour recoupant la première ligne de contour (170) en un point d'intersection (182), dans lequel la formation de la seconde ligne de contour (180) comprend les étapes consistant à :
diriger un second faisceau laser pulsé (112) orienté le long d'un trajet de faisceau (111) et délivré en sortie par une source de faisceau (110) à travers un élément optique asphérique (120) et jusque dans la pièce à usiner transparente (160) de telle sorte qu'une partie du second faisceau laser pulsé (112) dirigé jusque dans la pièce à usiner transparente (160) génère une absorption induite à l'intérieur de la pièce à usiner transparente (160), l'absorption induite produisant une modification de la pièce à usiner transparente (160) le long de la seconde ligne de contour (180) pour créer un défaut à l'intérieur de la pièce à usiner transparente (160) ; et
déplacer en translation la pièce à usiner transparente (160) et le second faisceau laser pulsé (112) l'un par rapport à l'autre le long de la seconde ligne de contour (180), en formant ainsi au laser la seconde pluralité de défauts le long de la ligne de contour à l'intérieur de la pièce à usiner transparente (160),
dans lequel l'énergie d'impulsion laser du second faisceau laser pulsé (112) est augmentée d'une première énergie d'impulsion laser à une seconde énergie d'impulsion laser à une première distance à partir du point d'intersection (182) où une zone optique du second faisceau laser pulsé (112) interagit avec une zone optique de la première ligne de contour (170) ; et
dans lequel l'énergie d'impulsion laser du second faisceau laser pulsé (112) diminue de la seconde énergie d'impulsion laser à la première énergie d'impulsion laser à une seconde distance du point d'intersection (182) où la zone optique du second faisceau laser pulsé (112) n'interagit pas avec la zone optique de la première ligne de contour (170).

2. Procédé selon la revendication 1, dans lequel la partie du premier faisceau laser pulsé (112) dirigé jusque dans la pièce à usiner transparente (160) comprend :
une longueur d'onde λ ;
une taille de spot *wₒ* ; et
une section transversale qui comprend une plage de Rayleigh *Z_{R}* qui est supérieure à ${F}_{D} \frac{{πw}_{o}^{2}}{λ}$, où
*F_{D}* est un facteur de divergence sans dimension comprenant une valeur de 10 ou plus.

3. Procédé selon la revendication 1 ou la revendication 2, dans lequel la partie du second faisceau laser pulsé (112) dirigé jusque dans la pièce à usiner transparente (160) comprend :
une longueur d'onde λ;
une taille de spot *wₒ* ; et
une section transversale qui comprend une plage de Rayleigh *Z_{R}* qui est supérieure à ${F}_{D} \frac{{πw}_{0}^{2}}{λ}$, où *F_{D}* est un facteur de divergence sans dimension comprenant une valeur de 10 ou plus.

4. Procédé selon l'une quelconque des revendications 1 à 3, dans lequel la seconde énergie d'impulsion laser est le double de la première énergie d'impulsion laser.

5. Procédé selon l'une quelconque des revendications 1 à 4, dans lequel la première distance est d'environ 100 µm à environ 500 µm.

6. Procédé selon l'une quelconque des revendications 1 à 5, dans lequel la seconde distance est d'environ 100 µm à environ 500 µm.

7. Procédé selon la revendication 1, dans lequel le premier faisceau laser pulsé (112) et le second faisceau laser pulsé (112) présentent une longueur d'onde λ et dans lequel la pièce à usiner transparente (160) présente des pertes combinées dues à l'absorption linéaire et à la diffusion inférieures à 20 %/mm dans la direction de propagation de faisceau.

8. Procédé selon la revendication 1, dans lequel la première source de faisceau (110) et la seconde source de faisceau (110) comprennent respectivement une première source de faisceau pulsé et une seconde source de faisceau pulsé produisant des salves d'impulsions avec d'environ 2 sous-impulsions par salve d'impulsions à environ 30 sous-impulsions par salve d'impulsions, et une énergie de salve d'impulsions est d'environ 100 µJ à environ 600 µJ par salve d'impulsions.

9. Procédé de traitement d'une pièce à usiner transparente (160), le procédé comprenant les étapes consistant à :
former une première ligne de contour (170) dans la pièce à usiner transparente (160), la première ligne de contour (170) comprenant une première pluralité de défauts dans la pièce à usiner transparente (160) de telle sorte que la première ligne de contour (170) définisse un premier contour, dans lequel la formation de la première ligne de contour (170) comprend les étapes consistant à :
diriger un premier faisceau laser pulsé (112) orienté le long d'un trajet de faisceau (111) et délivré en sortie par une source de faisceau (110) à travers un élément optique asphérique (120) et jusque dans la pièce à usiner transparente (160) de telle sorte qu'une partie du premier faisceau laser pulsé (112) dirigé jusque dans la pièce à usiner transparente (160) génère une absorption induite à l'intérieur de la pièce à usiner transparente (160), l'absorption induite produisant une modification de la pièce à usiner transparente (160) le long de la première ligne de contour (170) pour créer un défaut à l'intérieur de la pièce à usiner transparente (160) ; et
déplacer en translation la pièce à usiner transparente (160) et le premier faisceau laser pulsé (112) l'un par rapport à l'autre le long de la première ligne de contour (170), en formant ainsi au laser la première pluralité de défauts le long de la première ligne de contour (170) à l'intérieur de la pièce à usiner transparente (160) ;
dans lequel l'énergie d'impulsion laser du premier faisceau laser pulsé (112) est augmentée de la première énergie d'impulsion laser à la seconde énergie d'impulsion laser à une première distance par rapport à un bord du matériau transparent où une zone optique du premier faisceau laser pulsé (112) interagit avec une zone optique du bord du matériau transparent.

10. Procédé selon la revendication 9, dans lequel la partie du premier faisceau laser pulsé (112) dirigé jusque dans la pièce à usiner transparente (160) comprend :
une longueur d'onde λ;
une taille de spot *wₒ* ; et
une section transversale qui comprend une plage de Rayleigh *Z_{R}* qui est supérieure à ${F}_{D} \frac{{π}_{0}^{2}}{λ}$, où *F_{D}* est un facteur de divergence sans dimension comprenant une valeur de 10 ou plus.

11. Procédé selon la revendication 9 ou la revendication 10, dans lequel dans la seconde énergie d'impulsion laser est le double de la première énergie d'impulsion laser.

12. Procédé selon la revendication 9, dans lequel le premier faisceau laser pulsé (112) et le second faisceau laser pulsé (112) présentent une longueur d'onde λ et dans lequel la pièce à usiner transparente (160) présente des pertes combinées dues à l'absorption linéaire et à la diffusion inférieures à 20 %/mm dans la direction de propagation de faisceau.

13. Procédé selon la revendication 9, dans lequel la première source de faisceau (110) et la seconde source de faisceau (110) comprennent respectivement une première source de faisceau pulsé et une seconde source de faisceau pulsé produisant des salves d'impulsions avec d'environ 2 sous-impulsions par salve d'impulsions à environ 30 sous-impulsions par salve d'impulsions, et une énergie de salve d'impulsions est d'environ 100 µJ à environ 600 µJ par salve d'impulsions.
